# EUROPÄISCHE PATENTSCHRIFT

(11) **EP 2 056 631 B1**
(45) Veröffentlichungstag und Bekanntmachung des Hinweises auf die Patenterteilung: **28.01.2015**
(21) Anmeldenummer: 08151551.2
(22) Anmeldetag: 18.02.2008
(51) Int. Cl.: H04W 8/26, H04L 29/12

(54) **Verfahren zur Konfiguration eines persönlichen Netzwerks in einem Mobilfunknetz**
Method for configuring a personal network in a mobile wireless network
Procédé de configuration d'un réseau personnel dans un réseau radio mobile

(30) Priorität: 29.10.2007 DE 102007051899
(43) Veröffentlichungstag der Anmeldung: 06.05.2009
(73) Patentinhaber: Vodafone Holding GmbH, 40213 Düsseldorf (DE)
(72) Erfinder: Lu, Yang, 40489, Düsseldorf (DE); Wild, Peter, 47807, Krefeld (DE)
(74) Vertreter: Ring & Weisbrodt

(56) Entgegenhaltungen:
- ZTE CORPORATION: "PNM, TS 23.259 V0.4.0, Discussion on the issue of shared public user identity" 3GPP DRAFT; C1-072414-PN-SHAREDPUI-DISC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 26. September 2007 (2007-09-26), Seiten 1-3, XP050026543
- HUAWEI: "CR against TS 24.259, Signalling Flow for PN-Registration in the IM CN subsystem, C1-072246" 3GPP TSG CT WG1 MEETING - 49, [Online] 1. Oktober 2007 (2007-10-01), Seiten 1-3, XP002517480 Gefunden im Internet: URL:http://www.3gpp.org/ftp/tsg_ct/WG1_mm- cc-sm_ex-CN1/TSGC1_49/Docs/C1-072246.zip>
- "3rd Generation Partnership Project;Technical Specification Group Core Network and Terminals;Personal Network Management (PNM); Stage 3(Release 8)" 3GPP DRAFT; TS24259 V020_RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 22. Oktober 2007 (2007-10-22), Seiten 1-30, XP050027371

## Beschreibung

### Technisches Gebiet

Die Erfindung betrifft ein Verfahren zur Konfiguration eines persönlichen Netzwerks aus mindestens zwei Mobilfunkendgeräten mit jeweils einer privaten Nutzeridentität und mindestens einer gemeinsam von den Mobilfunkendgeräten benutzen öffentlichen Nutzeridentität in einer IMS-Domäne eines öffentlichen Mobilfunknetzes- *mit folgenden Verfahrensschritten:*
*a) Bereitstellen eines Applikationsservers in der IMS-Domäne zum Aufbau und zur Verwaltung des persönlichen Netzwerks,*
*b) Registrieren der privaten Nutzeridentitäten der Mobilfunkendgeräte und mindestens einer gemeinsam von den Mobilfunkendgeräten benutzen öffentlichen Nutzeridentität und speichern dieser Nutzeridentitäten in einem Datenspeicher des Applikationsservers des persönlichen Netzwerks,*
*c) Zuteilen eines eindeutigen Namens zu jedem Mobilfunkendgerät mit derselben gemeinsamen öffentlichen Nutzeridentität in dem Applikationsserver durch einen Benutzer und*/*oder einen Betreiber des Mobilfunknetzes,*
*d) Konfiguration des persönlichen Netzwerks durch einen Benutzer unter Verwendung der eindeutigen Namen der jeweiligen Mobilfunkendgeräte statt der privaten Nutzeridentitäten der Mobilfunkendgeräte.*

### Stand der Technik

Ein Mobilfunknetz der 3. Generation, beispielsweise nach dem UMTS- (Universal Mobil Telecommunication System) Standard, enthält neben einem leitungsorientierten (CS = Circuit Switched) Subsystem für leitungs- bzw. kanalvermittelte Verbindungen und einem paketorientierten (PS = Packet Switched) Subsystem zur Vermittlung von Datenpaketen auch ein Internet Protokoll Multimedia Subsystem (IMS). Diese Subsysteme oder Bereiche werden im UMTS auch Domänen genannt und sind in dem Vermittlungsnetz bzw. Kemnetz (Core Network Domäne) eines Mobilfunknetzes vorgesehen.

Die IMS-Domäne dient dazu, IP-basierte (Internet-Protokoll-basierte) Multimedia-Dienste anzubieten und insbesondere Internetdienste wie beispielsweise Internet-Telefonie, Internet-Radio oder Internet-Fernsehen auch für Mobilfunkteilnehmer zugänglich zu machen. Mit dem IMS wird eine gemeinsame Plattform für Echtzeit- und andere Dienste geschaffen und eine Konvergenz von CS- und PS-Netzwerkelementen eingeführt. Neue Dienste können mit so genannten Applikationsservern in dem IMS schnell und unkompliziert installiert werden. Das IMS ist eine nach 3GPP (Third Generation Partnership Projekt) standardisierte Netzwerkarchitektur für Telekommunikationsnetzwerke und dem Fachmann bspw. aus der Spezifikation "3GPP TS 23.228 V8.2.0: IP multimedia subsystem; Stage 2 (2007-09)" bekannt.

Zur Nutzung von Diensten über das IMS registriert sich ein Mobilfunkteilnehmer bei einem Anbieter und erhält eine private Nutzeridentität (IMPI = IP Multimedia Private User Identifier) und eine oder mehrere öffentliche Nutzeridentitäten (IMPU = IP Multimedia Public User Identifierer). Mit der privaten Nutzeridentität meldet sich ein Teilnehmer bei einer IMS-Domäne zur Nutzung von Diensten über die IMS-Domäne an. Eine private Nutzeridentität ist üblicher Weise an eine SIM- (Subscriber Identification Module) Karte und damit auch an ein, die SIM-Karte verwendendes Mobilfunkendgerät gebunden und kann beispielsweise eine IMSI (International Mobile Subscriber Identification) in Form einer 15stelligen Zahl enthalten. Die öffentlichen Nutzeridentitäten dienen als öffentliche Adressen des Teilnehmers in der IMS-Domäne für Dienste oder andere Teilnehmer und können z.B. als SIP-Adressen (Session Initiation Protocol - Adressen) ausgebildet sein. Eine öffentliche Nutzeridentität ist bezüglich des Nutzers eindeutig, aber nicht permanent an einen Anschluss oder ein Gerät gebunden, sondern von überall auf der Welt mit einem IMS-fähigen Endgerät nutzbar. Die gleiche öffentliche Nutzeridentität kann somit von mehreren angemeldeten und aktivierten Endgeräten verwendet werden.

Gegenwärtig verfügen immer mehr Mobilfunkteilnehmer über mehrere verschiedene Mobilfunkendgeräte mit unterschiedlichen Funktionalitäten zur mobilen Kommunikation. Auch besitzen Geräte im Heimbereich eines Mobilfunkteilnehmers, beispielsweise Haushaltsgeräte und Überwachungsanlagen, zunehmend eine Schnittstelle zur Anbindung an ein Netzwerk im persönlichen Bereich (PAN = Personal Area Network) oder an ein Mobilfunkendgerät. Um den Einsatz und die Verwaltung der verschiedenen Mobilfunkendgeräte und netzwerkfähigen Geräte eines Teilnehmers zu erleichtern, werden so genannte persönliche oder private Netze (PN) mit einer Managementeinrichtung (PNM: Personal Network Management) in einem Mobilfunknetz eingesetzt.

Mit Hilfe der PNM wird eine Vernetzung aller Mobilfunkendgeräte und netzwerkfähigen Geräte eines Teilnehmers eingerichtet und verwaltet. Eine Konfiguration des PNM ist direkt durch den Teilnehmer oder mit Unterstützung eines Mobilfunknetzbetreibers möglich. Ein PN ermöglicht beispielsweise eine Weiterleitung eingehender Nachrichten je nach Datenformat an das am besten zur Darstellung geeignete Mobilfunkendgerät. Dem Fachmann ist die Funktionsweise von persönlichen Netzwerken z.B. aus den Spezifikationen "3GPP TS 22.259 V8.3.0: Service requirements for Personal Network Management (PNM); Stage 1 (2006-06)" und "3GPP TS 23.259 V1.1.0: Personal Network Management (PNM), Procedures and Information Flows; Stage 2 (2007-10)" geläufig.

Probleme ergeben sich bei bekannten Verfahren und Einrichtungen für persönliche Netzwerke in einem Mobilfunknetz durch eine mögliche gemeinsame Nutzung einer öffentlichen Nutzeridentität durch mehrere Mobilfunkendgeräte des persönlichen Netzwerks. Insbesondere ist eine Konfiguration eines solchen persönlichen Netzwerks mit einer gemeinsam benutzten öffentlichen Nutzeridentität für die Mobilfunkendgeräte des persönlichen Netzwerks durch einen Benutzer nur mit Hilfe der privaten Nutzeridentitäten der beteiligten Mobilfunkendgeräte möglich. Die verschiedenen privaten Nutzeridentitäten der an einer Konfiguration beteiligten Mobilfunkendgeräte enthalten beispielsweise eine 15stellige IMSI. Einem Benutzer ist es daher nur mit erheblichem Aufwand oder gar nicht möglich, diese privaten Nutzeridentitäten für eine Konfiguration bereitzuhalten. Zudem stehen dem Benutzer zum Zeitpunkt einer Konfiguration üblicher Weise nicht alle an einer Konfiguration beteiligten Mobilfunkendgeräte zur Verfügung, um ihn bei einer Angabe der privaten Nutzeridentitäten zu unterstützen. Somit scheitert eine Konfiguration des persönlichen Netzwerks mit gemeinsamen öffentlichen Nutzeridentitäten an den benötigten, aber dem Benutzer nicht zur Verfügung stehenden privaten Nutzeridentitäten.

*Das Dolcument "PNM, TS 23.259 V0.4.0, Discussion on the issue of shared public user identity ", ZTE Corporation, 3GPP Draft, C1-072414-PN-SHAREDPUI-DISC beschreibt eine Konfiguration eines persönlichen Netzwerks in einem Mobilfunknetz, bei dem eine öffentliche Nutzeridentität von mehreren Endgeräten des persönlichen Netzwerks gemeinsam verwendet wird. Dazu wird Endgeräten des persönlichen Netzwerks jeweils eine persönliche Endgerätidentität zugeteilt. Die im Mobilfunknetz erzeugten persönlichen Endgerätidentitäten haben das Format PMI-xxxx, wobei xxxx eine vierstellige Zufallszahl darstellt. Die persönliche Endgerätidentität wird anschließend in dem entsprechenden Endgerät gespeichert. Auf diese Weise wird einem Benutzer ein einfacher Zugriff auf die persönliche Endgerätidentität ermöglicht. Bei einer Konfiguration des persönlichen Netzwerks wird die persönliche Endgerätidentität zusammen mit der gemeinsamen öffentlichen Nutzeridentität und weiterer Konfigurationsdaten als Konfigurationsanforderung an eine Verwaltungseinheit des persönlichen Netzwerks übermittelt und für eine eindeutige Zuordnung des Endgeräts verwendet.*

### Offenbarung der Erfindung

Aufgabe der Erfindung ist es daher, Nachteile des Standes der Technik zu vermeiden und eine Konfiguration eines persönlichen Netzwerks in einem Mobilfunknetz mit einer gemeinsam von mehreren Mobilfunkendgeräten genutzten öffentlichen Nutzeridentität für einen Benutzer einfach und sicher zu ermöglichen.

Erfindungsgemäß wird die Aufgabe bei einem Verfahren der eingangs genannten Art zur Konfiguration eines persönlichen Netzwerks aus mindestens zwei Mobilfunkendgeräten mit jeweils einer privaten Nutzeridentität und mindestens einer gemeinsam von den Mobilfunkendgeräten benutzen öffentlichen Nutzeridentität in einer IMS-Domäne eines öffentlichen Mobilfunknetzes mit folgenden Verfahrensschritten gelöst:
e) Auswählen eines eindeutigen Namens für das Mobilfunkendgerät durch den Benutzer des Mobilfunkendgeräts,
f) Überprüfen der Eignung des ausgewählten eindeutigen Namens durch den Betreiber des Mobilfunknetzes,
g) Ändern eines zugeteilten eindeutigen Namens für ein Mobilfunkendgerät bei einer Konfiguration des persönlichen Netzwerks durch den Benutzer.

Die Erfindung beruht auf dem Prinzip, nach einer Bereitstellung eines Applikationsservers für das persönliche Netzwerk und einer Registrierung von privaten und öffentlichen Nutzeridentitäten jedem Mobilfunkendgerät einer gemeinsamen öffentlichen Nutzeridentität einen eindeutigen Namen zuzuteilen. Die eindeutigen Namen werden vorzugsweise aber nicht unbedingt ausschließlich nur im Zusammenhang mit einer gemeinsamen öffentlichen Nutzeridentität verwendet. Der Benutzer ist dadurch in der Lage, eine Konfiguration des persönlichen Netzwerks anhand der ihm bekannten oder in den Mobilfunkendgeräten gespeicherten eindeutigen Namen und der öffentlichen Nutzeridentität vorzunehmen. Dazu werden die privaten Nutzeridentitäten der beteiligten Mobilfunkendgeräte nicht mehr von dem Benutzer benötigt. Dies bedeutet eine wesentliche Erleichterung der Konfiguration des persönlichen Netzwerks für einen Benutzer. Ferner werden die sicherheitsrelevanten privaten Nutzeridentitäten jeweils nur von dem entsprechenden Mobilfunkendgerät verwendet und sind nur in diesem gespeichert. Dadurch werden Sicherheitsrisiken durch eine Weitergabe von privaten Nutzeridentitäten an andere Mobilfunkendgeräte oder einen Benutzer vermieden.

*Bei dem erfindungsgemäßen Verfahren wird der eindeutige Name eines Mobilfunkendgeräts durch den Benutzer des Mobilfunkendgeräts ausgewählt. Dabei sind beispielsweise Namensvorschläge und*/*oder eine Überprüfung von ausgewählten Namen durch einen Betreiber des Mobilfunknetzes oder einen Anbieter des persönlichen Netzwerks möglich. Dies hat den Verteil, dass die eindeutigen Namen benutzerfreundlich Wünschen und Bedürfnissen eines Benutzers entsprechen. Ein persönliches Netzwerk wird somit optimaler personalisiert und eine Benutzerakzeptanz erhöht.*

*Die Erfindung sieht ein Ändern eines zugeteilten eindeutigen Namens für ein Mobilfunkendgerät bei einer Konfiguration des persönlichen Netzwerks durch den Benutzer vor. Dadurch ist der Benutzer jederzeit in der Lage, selber die eindeutigen Namen durch eine Konfiguration zu ändern. Eine Anpassung der eindeutigen Namen bei einer Änderung oder Erweiterung des persönlichen Netzwerks ist sehr benutzerfreundlich und unmittelbar durch den Benutzer durchführbar.*

Bei einer vorteilhaften Ausbildung des erfindungsgemäßen Verfahrens zur Konfiguration eines persönlichen Netzwerks in einem Mobilfunknetz erfolgt das Zuteilen des eindeutigen Namens für ein Mobilfunkendgerät durch den Benutzer und/oder den Betreiber des Mobilfunknetzes während einer Bereitstellung des persönlichen Netzwerks.

Durch diese Maßnahme wird sichergestellt, dass direkt nach einer Bereitstellung alle Mobilfunkendgeräte mit gleicher öffentlicher Nutzeridentität bereits über einen eindeutigen Namen verfügen. Somit ist eine Konfiguration oder ein Einsatz des persönlichen Netzwerks mit Nutzung der eindeutigen Namen ohne Verzögerung unmittelbar nach der Bereitstellung möglich. Einem Benutzer werden schnellst möglich die Vorteile einer Konfiguration des persönlichen Netzwerks mit eindeutigen Namen zur Verfügung gestellt.

Vorzugsweise wird in einer Ausbildung des erfindungsgemäßen Verfahrens der eindeutige Name für ein Mobilfunkendgerät durch den Betreiber des Mobilfunknetzes auswählt und dem Benutzer mitgeteilt. Dadurch wird gewährleistet, dass einem Mobilfunkendgerät ein geeigneter, beispielsweise einprägsamer und eindeutiger Name zugeteilt wird. Weiterhin wird sichergestellt, dass alle Mobilfunkendgeräte, welche eine öffentliche Nutzeridentität gemeinsam nutzen, umgehend einen jeweils eindeutigen Namen erhalten.

Bei einer Ausgestaltung des erfindungsgemäßen Verfahrens enthält der Verfahrensschritt der Konfiguration des persönlichen Netzwerks in dem Mobilfunknetz vorteilhaft folgende Schritte:
a) Übermitteln einer Konfigurationsanforderung von einem Mobilfunkendgerät zum Applikationsserver, welche entsprechende öffentliche Nutzeridentitäten und eindeutige Namen der an der Konfiguration beteiligten Mobilfunkendgeräte enthält,
b) Ersetzen der eindeutigen Namen der Mobilfunkendgeräte durch die entsprechenden privaten Nutzeridentitäten der Mobilfunkendgeräte bei dem Applikationsserver,
c) Speichern der neuen Konfiguration durch den Applikationsserver für eine Aktivierung der neuen Konfiguration,
d) Übermitteln einer Konfigurationsbestätigung von dem Applikationsserver an ein Mobilfunkendgerät zur Information eines Benutzers über eine erfolgreiche Konfiguration des persönlichen Netzwerks.

Mit diesen Verfahrensschritten ist eine Konfiguration des persönlichen Netzwerks mit einer Benutzung von eindeutigen Namen und gemeinsamen öffentlichen Nutzeridentitäten einfach und effektiv in dem Mobilfunknetz realisierbar. Ein Benutzer nutzt die ihm bekannten oder in den Mobilfunkendgeräten des persönlichen Netzwerks gespeicherten eindeutigen Namen. Nach dem Ersetzen dieser eindeutigen Namen durch entsprechende private Nutzeridentitäten in dem Applikationsserver werden die privaten Nutzeridentitäten vorteilhaft zur Konfiguration des persönlichen Netzwerks mit bereits für diese privaten Nutzeridentitäten zur Verfügung stehenden Funktionalitäten im Mobilfunknetz verwendet.

In einer weiteren bevorzugten Ausbildung des erfindungsgemäßen Verfahrens zur Konfiguration eines persönlichen Netzwerks in einem Mobilfunknetz wird eine Berechtigungsüberprüfung zur Konfiguration des persönlichen Netzwerks durchgeführt. Durch die Berechtigungsüberprüfung des Mobilfunkendgeräts und/oder des Benutzers wird eine willentliche oder unwillentliche Konfiguration des persönlichen Netzwerks und somit ein Missbrauch oder eine Störung durch unbefugte Benutzer bzw. deren Mobilfunkendgeräte verhindert. Somit wird die Sicherheit bei einer Nutzung von persönlichen Netzwerken wirkungsvoll verbessert.

Die Berechtigungsüberprüfung zur Konfiguration enthält in einer Ausgestaltung des erfindungsgemäßen Verfahrens vorzugsweise folgende Verfahrensschritte:
a) Überprüfen der Berechtigung zur Konfiguration durch den Applikationsserver anhand der übermittelten gemeinsamen öffentlichen Nutzeridentität und der für den Applikationsserver gespeicherten gemeinsamen öffentlichen Nutzeridentität.
b) Speichern der neuen Konfiguration für eine Aktivierung bei Übereinstimmung der übermittelten gemeinsamen öffentlichen Nutzeridentität und der gespeicherten gemeinsamen öffentlichen Nutzeridentität.

Durch den Vergleich der vom Applikationsserver empfangenen öffentlichen Nutzeridentität mit der, beispielsweise bei einer Bereitstellung des persönlichen Netzwerks oder bei einer Registrierung eines Mobilfunkendgeräts in dem persönlichen Netzwerk gespeicherten öffentlichen Nutzeridentität wird eine wirksame Überprüfung der Berechtigung zur Konfiguration erzielt. Ferner ist eine solche Überprüfung in dem Mobilfunknetz ohne großen Aufwand installierbar und unkompliziert durchführbar.

In einer bevorzugten Weiterbildung des erfindungsgemäßen Verfahrens zur Konfiguration eines persönlichen Netzwerks in einem Mobilfunknetz wird die Konfigurationsanforderung von einem Mobilfunkendgerät an den Applikationsserver als XML-Nachricht übermittelt. XML ist eine weit verbreitete, universale, erweiterbare Auszeichnungssprache (engl. eXtensible Markup Language) zur Darstellung hierarchisch strukturierter Daten in Form von Textdateien und wird bevorzugt für den Austausch von Daten zwischen unterschiedlichen IT-Systemen eingesetzt. Daher ist eine Erzeugung einer XML-Nachricht von einer Vielzahl verschiedener Mobilfunkendgeräte ohne größeren Aufwand schnell und unproblematisch möglich. Eine Konfiguration des persönlichen Netzwerks ist für einen Benutzer sehr flexibel über verschiedene Mobilfunkendgeräte möglich.

Eine weiter vorteilhafte Ausgestaltung des erfindungsgemäßen Verfahrens wird dadurch erreicht, dass in der Konfigurationsanforderung von einem Mobilfunkendgerät an den Applikationsserver zusätzlich eine Konfigurationsebene, ein Prioritätswert und/oder weitere Konfigurationsparameter übermittelt werden. Mit Konfigurationsebenen lassen sich Bereiche, wie beispielsweise globale oder netzwerkinterne Anrufe oder Gruppen von Mobilfunkendgeräten im persönlichen Netzwerk beschreiben, für die eine Konfiguration gültig sein soll. Prioritätswerte legen zum Beispiel bei mehreren, sich für ein Ereignis überscheidenden Konfigurationen eine jeweils gültige Konfiguration fest. Mit Hilfe dieser und weiterer Konfigurationsparameter ist eine Konfiguration sehr präzise an Bedürfnisse eines Benutzers und an vorhandene Mobilfunkendgeräte im persönlichen Netzwerk anpassbar.

Ferner führt der der Applikationsserver des persönlichen Netzwerks bei einer Ausbildung des Verfahrens zur Konfiguration eines persönlichen Netzwerks in einem Mobilfunknetz vorteilhaft eine Rufumleitung für die Mobilfunkendgeräte des persönlichen Netzwerks entsprechend einer Konfiguration durch. Beispielsweise ist eine flexible Zuordnung von öffentlichen Nutzeridentitäten an bestimmte Mobilfunkendgeräte eines Benutzer und damit eine Weiterleitung von an eine öffentliche Nutzeridentität adressierte Ruf- oder Sitzungsaufforderungen zu einem entsprechenden Mobilfunkendgerät möglich. Dabei kann auch eine Rufumleitung von eingehenden Nachrichten an das, je nach Datenformat am besten zur Darstellung geeignete und zur Verfügung stehende Mobilfunkendgerät stattfinden. Eine solche, für einen Benutzer sehr praktische Rufumleitung bzw. Rufweiterleitung durch das persönliche Netzwerk lässt sich mit dieser Ausbildung des erfindungsgemäßen Verfahrens äußerst komfortabel konfigurieren. Dabei ist insbesondere eine Verwendung einer gemeinsamen öffentlichen Nutzeridentität durch mehrere Mobilfunkendgeräte unproblematisch konfigurierbar.

Weitere Ausgestaltungen und Vorteile ergeben sich aus dem Gegenstand der Unteransprüche, sowie der Zeichnungen mit der dazugehörigen Beschreibung.

Ein Ausführungsbeispiel der Erfindung ist nachstehend unter Bezugnahme auf die zugehörigen Zeichnungen näher erläutert.

### Kurze Beschreibung der Zeichnungen

- Fig. 1: zeigt in einer schematischen Prinzipskizze ein persönliches Netzwerk von Mobilfunkendgeräten, welches über einen Applikationsserver in einer IMS-Domäne eines Mobilfunknetzes ausgebildet wird.
- Fig. 2: zeigt in einem schematischen Diagramm einen Ablauf einer Regristration eines Mobilfunkendgeräts in einem Applikationsserver für ein persönliches Netzwerk in einer IMS-Domäne.
- Fig. 3: zeigt in einem schematischen Diagramm einen Ablauf einer Konfiguration eines persönlichen Netzwerks in einer IMS-Domäne mit Mobilfunkendgeräten, welche die gleiche öffentliche Nutzeridentität nutzen.

### Bevorzugtes Ausführungsbeispiel

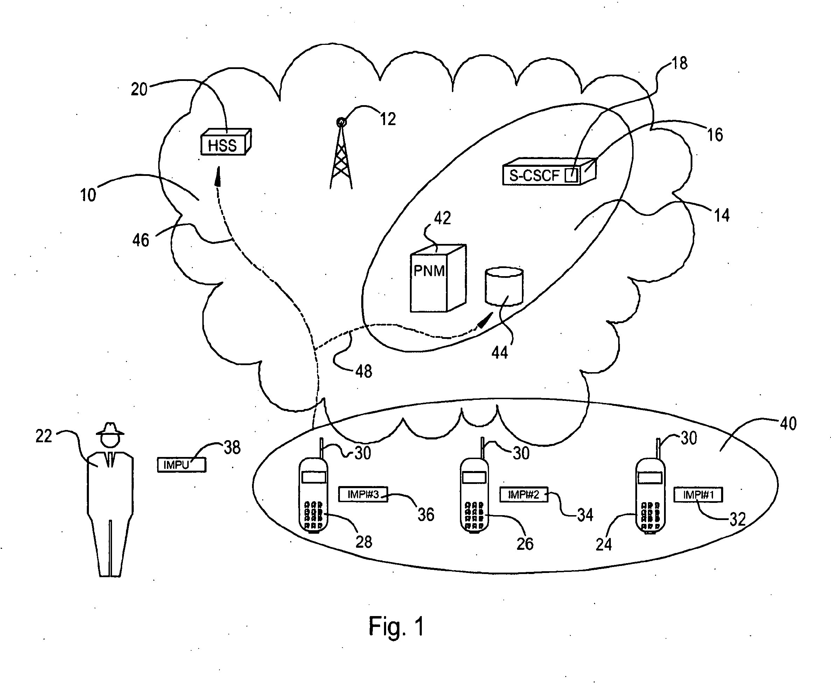

In Fig. 1 wird mit 10 ein Mobilfunknetz bezeichnet. Das Mobilfunknetz 10 ist ein Mobilfunknetz der 2,5., 3. oder 4. Generation, beispielsweise nach dem GSM/GPRS-, UMTS-, CDMA2000-, FOMA-, TD-SCDMA-, LTE/SAE (EPS) oder WiMAX-Standard. Dem Fachmann sind solche Mobilfunknetze mit den entsprechenden Bestandteilen geläufig. Der Einfachheit halber wird das Mobilfunknetz 10 daher nur durch eine Wolke mit einem darin enthaltenen Funkmast 12 stilisiert dargestellt. Das Mobilfunknetz 10 enthält eine IP-Multimedia-Subsystem- (IMS-) Domäne 14 zum Integrieren und Anbieten von IP-basierten Multimedia-Diensten und anderen Diensten für Benutzer.

Zur Benutzerregistrierung und Verwaltung von Ruf- bzw. Sitzungszuständen in der IMS-Domäne 14 ist eine Ruf- und Sitzungssteuereinheit 16 vorgesehen, welche im Folgende auch als S-CSCF 16 (Serving - Call Session Control Function) bezeichnet wird. Die S-CSCF 16 verfügt über eine Registrierungseinheit 18 zur Registrierung von Mobilfunkendgeräten in der IMS-Domäne 14. Weiterhin enthält das Mobilfunknetz 10 einen Teilnehmerheimatserver 20 (engl. HSS: Home Subscriber Server). Der Teilnehmerheimatserver 20 führt Benutzerprofile und ist zuständig für eine Benutzeridentifikation und Zugangsautorisierung zu Diensten des Mobilfunknetzes 10. Die S-CSCF 16 und der HSS 20 sind dem Fachmann wohlbekannte Einrichtungen für ein Mobilfunknetz der oben beschriebenen Art.

Ein Benutzer 22 verfügt beispielhaft über drei Mobilfunkendgeräte 24, 26, 28. Die Mobilfunkendgeräte 24, 26, 28 können jeweils beispielsweise ein Mobiltelefon, Handy, Autotelefon, Smartphone, ein stationärer Rechner (z.B. PC) oder mobiler Rechner (z.B. Notebook, PDA) oder ein anderes Gerät mit einer eingebauten oder über eine Schnittstelle angeschlossenen Mobilfunkschnittstelle 30 (z.B. eine PMCCIA-Karte) sein. Mit den Mobilfunkendgeräten 24, 26, 28 ist eine Kommunikation über das Mobilfunknetz 10 mit der jeweiligen Mobilfunkschnittstelle 30 möglich. Dazu verfügen die Mobilfunkendgeräte 24, 26, 28 ferner über eine in Fig. 1 nicht dargestellte USIM-(Universal Subscriber Identification Module) oder SIM- (Subscriber Identification Module) Karte zur Identifikation und Autorisation im Mobilfunknetz 10.

Insbesondere ist mit den Mobilfunkendgeräten 24, 26, 28 eine Nutzung der IMS-Domäne 14 möglich. Jedes Mobilfunkendgerät 24, 26, 28 besitzt eine entsprechende private Nutzeridentität 32, 34, 36, welche im Folgenden auch mit IMPI#1, IMPI#2 und IMPI#3 (IMPI: IP Multimedia Private User Identifier) bezeichnet werden. Mit der entsprechenden privaten Nutzeridentität 32, 34, 36 registrieren sich die Mobilfunkendgeräte 24, 26, 28 über das Mobilfunknetz 10 in der IMS-Domäne 14, um Dienste über diese zu nutzen. Um über die IMS-Domäne für andere Benutzer oder für Dienste erreichbar zu sein, verfügt der Benutzer 22 ferner über eine gemeinsame öffentliche Nutzeridentität 38 für die Mobilfunkendgeräte 24, 26, 28, welche im Folgenden auch als IMPU (IMPU: IP Multimedia Public Identifier - User ID) bezeichnet wird. Die öffentliche Nutzeridentität 38 kann beispielsweise im SIP-Format (Session Initiation Protocol) ausgebildet sein. Es ist auch eine Verwendung von mehreren öffentlichen Nutzeridentitäten möglich, welche den Mobilfunkendgeräten 24, 26, 28 je nach Bedarf zugeordnet werden. Dabei können ebenfalls verschiedene öffentliche Nutzeridentitäten gemeinsam von mehreren Mobilfunkendgeräte 24, 26, 28 verwendet werden.

Die Mobilfunkendgeräte 24, 26, 28 können unterschiedliche Funktionalitäten aufweisen und jeweils in einem anderen Bereich, wie beispielsweise am Arbeitsplatz, zu Hause oder unterwegs verwendet werden. Um dem Benutzer 22 eine Nutzung, Verwaltung und Koordination der Mobilfunkendgeräte 24, 26, 28 zu erleichtern, ist über die IMS-Domäne 14 ein persönliches Netzwerk 40 zwischen den Mobilfunkendgeräten 24, 26, 28 eingerichtet. Dazu verfügt die IMS-Domäne 14 über einen Applikationsserver 42 zum Aufbau und zur Verwaltung des persönlichen Netzwerks 40. Der Applikationsserver 42 wird daher auch als PNM-AS 42 (Personal Network Management - Application Server) bezeichnet. Der PNM-AS 42 verwaltet insbesondere den Datenaustausch zwischen den Mobilfunkendgeräten 24, 26, 28 und leitet z.B. an eine öffentliche Nutzeridentität 38 adressierte Ruf- bzw. Sitzungsanforderung an ein entsprechendes Mobilfunkendgerät 24, 26, 28 weiter. Die eigentliche Datenübermittlung erfolgt dabei über herkömmliche Datenkanäle im Mobilfunknetz 10. Weiterhin verfügt der PNM-AS 42 über eine Datenbank 44 als Datenspeicher, in der zu mindest Konfigurationen des persönlichen Netzwerks 40, private Nutzeridentitäten 32, 34, 36 und die öffentliche Nutzeridentität 38 für einen späteren Zugriff gespeichert werden.

Alternativ oder zusätzlich können in das persönliche Netzwerk 40 auch Geräte ohne USIM-Karte oder SIM-Karte oder ohne Mobilfunkschnittstelle 30 integriert werden. Auch eine Einbindung von lokalen Netzwerken ist möglich. In solchen Fällen werden eine USIM-Karte oder SIM-Karte bzw. eine Mobilfunkschnittstelle 30 eines der Mobilfunkendgeräte 24, 26, 28 für die Geräte mitbenutzt. Dazu werden die Geräte beispielsweise durch entsprechende Schnittstellen mit den Mobilfunkendgeräten 24, 26, 28 verbunden und interne Adressen als private Nutzeridentitäten verwendet.

Als erstes wird der PNM-AS 42 in der IMS-Domäne 14 für ein persönliches Netzwerk 40 des Benutzers 22 bereitgestellt. Dies kann bereits bei einer Aushändigung der SIM-Karten für die Mobilfunkendgeräte 24, 26, 28 oder auch später durch einen Betreiber des Mobilfunknetzes 10 oder einem Anbieter des persönlichen Netzwerks 40 vorgenommen werden. Anschließend werden die privaten Nutzeridentitäten 32, 34, 36 und die öffentliche Nutzeridentität 38 des Benutzers 22 beispielsweise bei dem Registrieren in dem Teilnehmerheimatserver 20 während der Ausgabe der SIM-Karten erfasst und in der Datenbank 44 des PNM-AS 42 gespeichert. Dieser Vorgang wird in Fig. 1 durch die gestrichelten Pfeile 46 und 48 dargestellt. Ferner können weitere Daten und Voreinstellungen in der Datenbank für den Benutzer 22 gespeichert werden. So ist beispielsweise eine Zuordnung der öffentlichen Nutzeridentitäten 38 an bestimmte private Nutzeridentitäten 32, 34, 36 und somit an entsprechende Mobilfunkendgeräte 24, 26, 28 als Voreinstellung möglich. Andererseits ist eine Erfassung von privaten Nutzeridentitäten 32, 34, 36 und öffentlichen Nutzeridentitäten 38 eines Mobilfunkendgeräts auch später durch eine entsprechende Registrierung möglich.

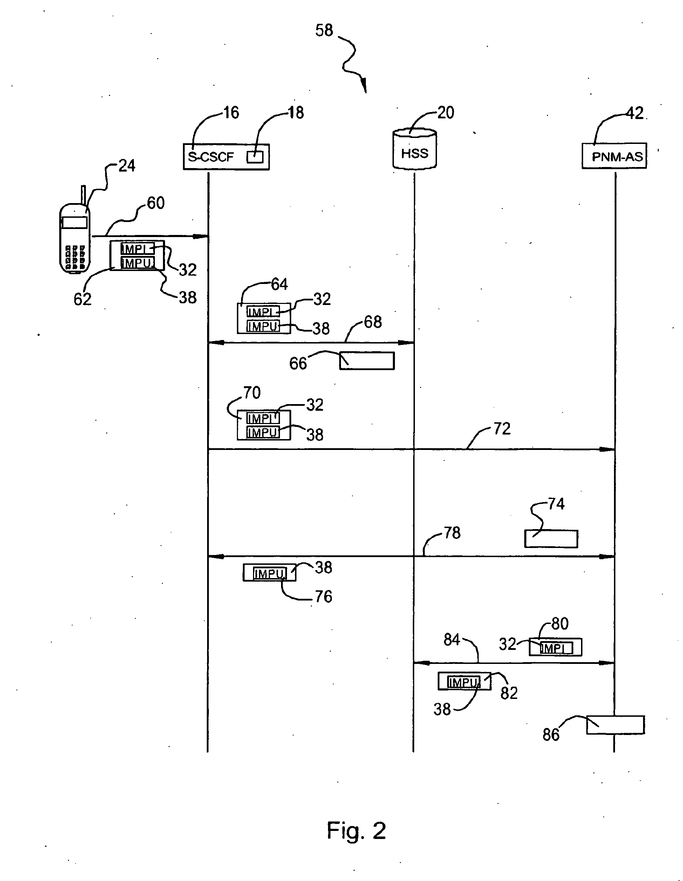

Ein Beispiel einer solchen Registrierung eines Mobilfunkendgeräts in einem persönlichen Netzwerk nach Fig. 1 wird im Folgenden mit Bezug auf Fig. 2 beschrieben. Gleiche Bestandteile werden daher mit entsprechenden Bezugszeichen bezeichnet. Zur Registrierung 58 eines Mobilfunkendgeräts 24 bei dem PNM-AS 42 übermittelt (Pfeil 60) das Mobilfunkendgerät 24 eine Registrierungsanforderung 62 an die S-CSCF 16 der IMS-Domäne 14 des Mobilfunknetzes 10 oder an eine darin enthaltene Registrierungseinheit 18. Die Registrierungsanforderung 62 enthält eine private Nutzeridentität 32 und eine öffentliche Nutzeridentität 38 des Mobilfunkendgeräts 24. Auf den Erhalt der Registrierungsanforderung 62 übermittelt die S-CSCF 16 eine Informationsanforderung 64 (z.B. als Cx-Put/Cx-Pull) an den Teilnehmerheimatserver 20 mit der privaten Nutzeridentität 32 und der öffentlichen Nutzeridentität 38 und erhält als Antwort 66 neben anderen Daten beispielsweise auch eine Adresse/einen Name des PNM-AS 42 für das persönliche Netzwerk, Pfeil 68.

Die S-CSCF 16 leitet daraufhin die öffentliche Nutzeridentität 38 und optional die private Nutzeridentität 32 in einer Drittregistrierungsanforderung 70 an den PNM-AS 42 weiter, Pfeil 72. Anschließend übermittelt der PNM-AS 42 Teilnahmeinformationen 74 bezüglich der öffentlichen Nutzeridentität 38 zum Anmelden an die S-CSCF 16 und erhält daraufhin von der S-CSCF 16 Anmeldeinformationen 76 mit öffentlichen Nutzeridentitäten und Funktionalitäten beteiligter Mobilfunkendgeräte 24, 26, 28, Pfeil 78. Alternativ kann dieser Vorgang 78 auch mit dem Teilnehmerheimatserver 20 erfolgen. Auf diese Weise erhält der PNM-AS 42 bei einer Registrierung vorteilhaft auch Informationen über vorhandene Funktionalitäten beteiligter Mobilfunkendgeräte 24, 26, 28 und kann diese bei einer Konfiguration berücksichtigen.

Optional erfolgt anschließend eine Berechtigungsüberprüfung der Registrierung durch den PNM-AS 42. Dazu sendet der PNM-AS 42 eine Anfrage 80 mit der privaten Nutzeridentität 32 an den Teilnehmerheimatserver 20 und erhält die zugehörige öffentliche Nutzeridentität 38 von dem Teilnehmerheimatserver 20 als Antwort 82, Pfeil 84. Abschließend verifiziert der PNM-AS 42 die Registrierung durch einen Vergleich der öffentlichen Nutzeridentität 38 von dem Teilnehmerheimatserver 20 und der öffentlichen Nutzeridentität 38 von der S-CSCF 16 und trägt bei einer erfolgreichen Verifizierung die öffentliche Nutzeridentität 38 und optional die private Nutzeridentität 32 zur Nutzung in eine Datenbank 44 (siehe Fig. 1) des persönlichen Netzwerks 40 ein (Kasten 86, Fig. 2).

Nach einer Registrierung aller Mobilfunkendgeräte 24, 26, 28 des persönlichen Netzwerks 40 nach Fig. 1, beispielsweise nach der oben beschriebenen Vorgehensweise, stehen die privaten Nutzeridentitäten 32 (IMPI#1), 34 (IMPI#2), 36 (IMPI#3) und die öffentliche Nutzeridentität 38 (IMPU) beispielhaft nach Tabelle 1 in der Datenbank 44 für den PNM-AS 42 bereit. Aus Tabelle 1 wird deutlich, das in diesem Beispiel alle Mobilfunkendgeräte dieselbe öffentliche Nutzeridentität 38 benutzen. Es ist selbstverständlich auch eine Nutzung mehrerer gemeinsamer öffentlicher Nutzeridentitäten durch einige oder alle Mobilfunkendgeräte 24, 26, 28 möglich.

**Tabelle 1: Beispiel eines Eintrags in einem Speicher für ein persönliches Netzwerk**

| Mobilfunkendgerät | Private Nutzeridentität | Öffentliche Nutzeridentität |
|---|---|---|
| 24 | IMPI#1 | IMPU |
| 26 | IMPI#2 | IMPU |
| 28 | IMPI#3 | IMPU |

Noch während einer Bereitstellung des persönlichen Netzwerks 40 bzw. der Registrierung eines oder aller Mobilfunkendgeräte 24, 26, 26 wird durch den Benutzer (22), einen Betreiber des Mobilfunknetzes 10 oder einen Dienstanbieter zu jedem Mobilfunkendgerät 24, 26, 28 mit derselben öffentlichen Nutzeridentität 38 ein eindeutiger Name hinzugefügt, welcher in diesem Ausführungsbeispiel nur zusammen mit der öffentlichen Nutzeridentität 38 in dem persönlichen Netzwerk 40 verwendet wird. Dies ist in Tabelle 2 mit beispielhaften Namen #1, #2, #3 dargestellt. Falls eine Betreiber des Mobilfunknetzes 10 oder einen Dienstanbieter die eindeutigen Namen (#1, #2, #3) ausgewählt hat, werden diese dem Benutzer 22 des persönlichen Netzwerks 44 mitgeteilt und sind benutzerfreundlich möglichst einfach merkbar. Es ist auch eine Speicherung der eindeutigen (#1, #2, #2) Namen in den Mobilfunkendgeräten 24, 26, 28 möglich. Eine Auswahl von eindeutigen Namen erfolgt vor der Zuteilung an private Nutzeridentitäten 32, 34, 36 durch einen Betreiber des Mobilfunknetzes 10, einen Anbieter des persönlichen Netzwerks 40 oder den Benutzer 22. Der Betreiber oder der Anbieter können dazu dem Benutzer 22 Namen vorschlagen und nach einer Auswahl eine Eignungsprüfung vornehmen.

Die eindeutigen Namen (#1, #2, #3) können bei einer weiter unten beschriebenen, später ausgeführten Konfiguration von dem Benutzer verändert werden.

**Tabelle 2: Beispiel einer Zuteilung von eindeutigen Namen für Mobilfunkendgeräte in einem persönlichen Netzwerk**

| Mobilfunkendgerät | Private Nutzeridentität | Öffentliche Nutzeridentität | Eindeutiger Name des Mobilfunkendgeräts im pers. Netzwerk |
|---|---|---|---|
| 24 | IMPI#1 | IMPU | #1 |
| 26 | IMPI#2 | IMPU | #2 |
| 28 | IMPI#3 | IMPU | #3 |

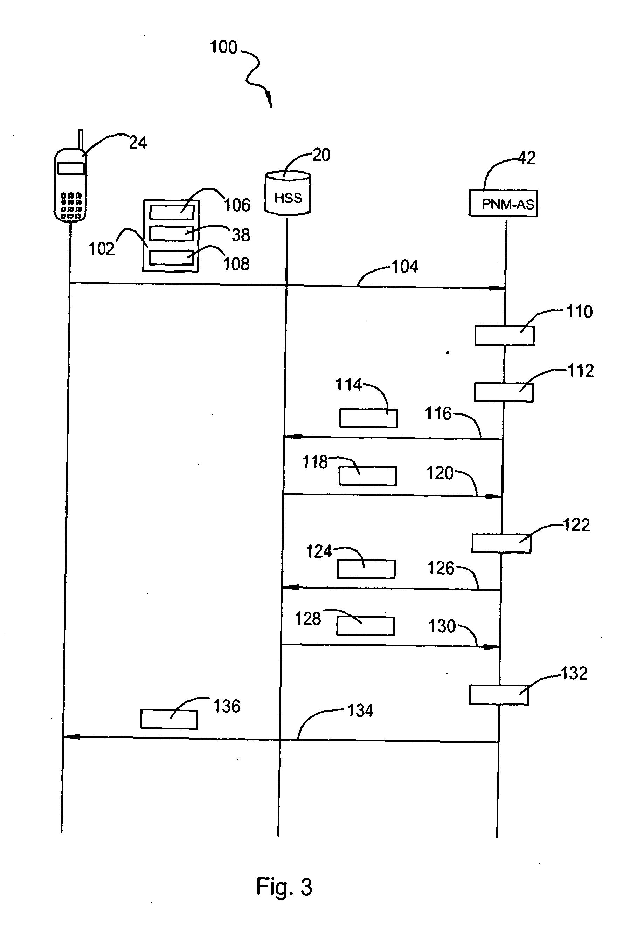

In Fig. 3 wird ein Beispiel einer anschließenden Konfiguration 100 eines persönlichen Netzwerks 40 nach Fig. 1 durch einen Benutzer 22 dargestellt. Gleiche Bestandteile werden daher in Fig. 3 ebenfalls mit entsprechenden Bezugszeichen bezeichnet. Ferner wird im Folgenden auf Fig. 1 und Fig. 3 Bezug genommen. Zur Konfiguration sendet der Benutzer 22 mit einem Mobilfunkendgerät 24 eine Konfigurationsanforderung 102 an einen Applikationsserver 42 für das persönliche Netzwerk 40 (Pfeil 104). In der Konfigurationsanforderung 102 wird eine gewünschte Konfiguration mit Hilfe der eindeutigen Namen 106 (z.B. #1, #2, #3 nach Tabelle 2) der beteiligten Mobilfunkendgeräte 24, 26, 28 und der öffentlichen Nutzeridentität 38 (IMPU) beschrieben. Dabei können auch weitere Konfigurationsparameter 108, wie eine Konfigurationsebene und/oder ein Prioritätswert übermittelt werden, um eine Konfiguration genauer an Bedürfnisse des Benutzers 22 und/oder beteiligte Mobilfunkendgeräte 24, 26, 28 anzupassen.

Beispielsweise möchte der Benutzer 22 sein persönliches Netzwerk 40 so konfigurieren, dass alle eingehenden Rufe an eine öffentliche Nutzeridentität 38 (z.B. "sip:PN_user1_public1@home1.net") nicht mehr an das Mobilfunkendgerät 24 mit dem eindeutigen Namen #1 nach Tabelle 2, sondern stattdessen an das Mobilfunkendgerät 28 mit dem eindeutigen Namen #3 nach Tabelle 2 weitergeleitet werden. Dazu übermittelt (102) der Benutzer 22 zum Beispiel mit dem Mobilfunkendgerät 24 die folgenden XML-Nachricht (Extensible Markup Language - Nachricht) als Konfigurationsanforderung 102 an den PNM-AS 42:

```
 <?xml version="1.0" encoding="utf-8"?>
      <pnm:PN_Configuration_Request id="vf_adam_001 xmlns:pnm="PNM-
schema-of-3gpp">
      <ConfRequestUserID> "sip:PN_user1_public1@home1.net"
</ConfRequestUserID>
      <RedirectedUser>
            <RedirectedUserID> "sip:pn_user_public@home1.net"
</RedirectedUserID>
            <PNUserName> " #3 " </PNUserName>
      </RedirectedUser>
      <RedirectingUser>
            <RedirectingUserID> "sip:pn_user_public@home1.net"
</RedirectingUserID>
            <PNUserName> " #1 " </PNUserName>
      </RedirectingUser>
      <ConfLevel> "global" </ConfLevel>
      <ConfPrio> "1 " </ConfPrio>
      </pnm:PN_Configuration_Request>
```

In dem Applikationsserver 42 wird zunächst eine Authentifizierung des Absenders der Konfigurationsanforderung 102 durchgeführt. Bei erfolgreicher Authentifizierung werden anschließend alle eindeutigen Namen 106 durch die entsprechende private Nutzeridentität 32, 34, 36 nach Tabelle 2 ersetzt (Kasten 110). Dann erfolgt optional eine Berechtigungsüberprüfung (Kasten 112) zur Konfiguration in dem PNM-AS 42 durch einen Vergleich der empfangenen öffentlichen Nutzeridentität 38 mit einer bei der Bereitstellung des persönlichen Netzwerks 40 oder bei einer Registrierung von Mobilfunkendgeräten 24, 26, 28 gespeicherten öffentlichen Nutzeridentität 38.

Bei erfolgreicher Überprüfung 112 übermittelt der PNM-AS 104 eine Anfrage 114 an einen Teilnehmerheimatserver 20 nach zur Verfügung stehenden Diensten für die öffentliche Nutzeridentität 38, Pfeil 116. Als Antwort 118 werden dem PNM-AS 42 die entsprechenden Dienste und Funktionalitäten der Mobilfunkendgeräte 24, 26, 28 mitgeteilt, Pfeil 120. Daraufhin werden die Funktionalitäten der Mobilfunkendgeräte 24, 26, 28 und die für die öffentliche Nutzeridentität 38 bereitgestellten Dienste verifiziert (Kasten 122) und eine entsprechende Teilnahmeanfrage 124 an den Teilnehmerheimatserver 20 übermittelt, Pfeil 126. Der Teilnehmerheimatserver 20 bestätigt die Teilnahmeanfrage 124 mit einer Bestätigungsantwort 128, Pfeil 130. Abschließend speichert der PNM-AS 42 die neue Konfiguration (Kasten 132) und übermittelt (Pfeil 134) eine Bestätigung 136 der erfolgten Konfiguration an das Mobilfunkendgerät 24. Dabei kann eine Aktivierung der Konfiguration unmittelbar nach einer Speicherung oder erst später, z.B. durch den Benutzer 22 oder einen Betreiber des Mobilfunknetzes 10 erfolgen.

Folglich hat der Benutzer 22 sein persönliches Netzwerk 40 nach seinen Wünschen konfiguriert, ohne dabei die privaten Nutzeridentitäten 32, 34, 36 von beteiligten Mobilfunkendgeräten 24, 26, 28 zu benutzen. Die Verwendung eindeutiger Namen 106 statt privater Nutzeridentitäten 32, 34, 36 bei einer gemeinsamen von den Mobilfunkendgeräten 24, 26, 28 benutzten öffentlichen Nutzeridentität 38 ermöglicht dem Benutzer 22 eine einfache und sichere Konfiguration 100 seines persönlichen Netzwerks 40.

## Patentansprüche

1. Verfahren zur Konfiguration eines persönlichen Netzwerks (40) aus mindestens zwei Mobilfunkendgeräten (24, 26, 28) mit jeweils einer privaten Nutzeridentität (32, 34, 36) und mindestens einer gemeinsam von den Mobilfunkendgeräten (24, 26, 28) benutzen öffentlichen Nutzeridentität (38) in einer IMS-Domäne (14) eines öffentlichen Mobilfunknetzes (10) mit folgenden Verfahrensschritten:
a) Bereitstellen eines Applikationsservers (42) in der IMS-Domäne (14) zum Aufbau und zur Verwaltung des persönlichen Netzwerks (40),
b) Registrieren (48, 58) der privaten Nutzeridentitäten (32, 34, 36) der Mobilfunkendgeräte (24, 26, 28) und mindestens einer gemeinsam von den Mobilfunkendgeräten (24, 26, 28) benutzen öffentlichen Nutzeridentität (38) und speichern dieser Nutzeridentitäten (32, 34, 36, 38) in einem Datenspeicher (44) des Applikationsservers (42) des persönlichen Netzwerks (40),
c) Zuteilen eines eindeutigen Namens (106) zu jedem Mobilfunkendgerät (24, 26, 28) mit derselben gemeinsamen öffentlichen Nutzeridentität (38) in dem Applikationsserver (42) durch einen Benutzer (22) und/oder einen Betreiber des Mobilfunknetzes (10),
d) Konfiguration (100) des persönlichen Netzwerks (42) durch einen Benutzer (22) unter Verwendung der eindeutigen Namen (106) der jeweiligen Mobilfunkendgeräte (24, 26, 28) statt der privaten Nutzeridentitäten (32, 34, 36) der Mobilfunkendgeräte (24, 26, 28),
***gekennzeichnet durch***
e) Auswählen eines eindeutigen Namens (106) für das Mobilfunkendgerät (24, 26, 28) **durch** den Benutzer (22) des Mobilfunkendgeräts (24, 26, 28),
f) Überprüfen der Eignung des ausgewählten eindeutigen Namens (106) durch den Betreiber des Mobilfunknetzes (10),
g) Ändern eines zugeteilten eindeutigen Namens (106) für ein Mobilfunkendgerät (24, 26, 28) bei einer Konfiguration (100) des persönlichen Netzwerks (40) **durch** den Benutzer (22).

2. Verfahren zur Konfiguration eines persönlichen Netzwerks (40) in einem Mobilfunknetz (10) nach Anspruch 1, **dadurch gekennzeichnet, dass** das Zuteilen des eindeutigen Namens (106) für ein Mobilfunkendgerät (24, 26, 28) durch den Benutzer (22) und/oder den Betreiber des Mobilfunknetzes (10) während einer Bereitstellung des persönlichen Netzwerks (40) erfolgt.

3. Verfahren zur Konfiguration eines persönlichen Netzwerks (40) in einem Mobilfunknetz (10) nach einem der Ansprüche 1 bis *2*, **dadurch gekennzeichnet, dass** der Verfahrensschritt der Konfiguration (100) des persönlichen Netzwerks (40) in dem Mobilfunknetz (10) ferner folgende Schritte enthält:
a) Übermitteln (104) einer Konfigurationsanforderung (102) von einem Mobilfunkendgerät (24) zum Applikationsserver (42), welche entsprechende öffentliche Nutzeridentitäten (38) und eindeutige Namen (106) der an der Konfiguration (100) beteiligten Mobilfunkendgeräte (24, 26, 28) enthält,
b) Ersetzen (110) der eindeutigen Namen (106) der Mobilfunkendgeräte (24, 26, 28) durch die entsprechenden privaten Nutzeridentitäten (32, 34, 36) der Mobilfunkendgeräte (24, 26, 28) bei dem Applikationsserver (42),
c) Speichern (132) der neuen Konfiguration durch den Applikationsserver (42) für eine Aktivierung der neuen Konfiguration,
d) Übermitteln (134) einer Konfigurationsbestätigung (136) von dem Applikationsserver (42) an ein Mobilfunkendgerät (24) zur Information eines Benutzers (22) über eine erfolgreiche Konfiguration (100) des persönlichen Netzwerks (40).

4. Verfahren zur Konfiguration eines persönlichen Netzwerks (40) in einem Mobilfunknetz (10) nach einem der Ansprüche 1 bis *3*, **dadurch gekennzeichnet, dass** eine Berechtigungsüberprüfung (112) zur Konfiguration (100) des persönlichen Netzwerks (40) durchgeführt wird.

5. Verfahren zur Konfiguration eines persönlichen Netzwerks (40) in einem Mobilfunknetz (10) nach Anspruch *4*, **dadurch gekennzeichnet, dass** die Berechtigungsüberprüfung (112) folgenden Verfahrensschritten enthält:
a) Überprüfen (122) der Berechtigung zur Konfiguration (100) durch den Applikationsserver (42) anhand der übermittelten gemeinsamen öffentlichen Nutzeridentität (38) und der für den Applikationsserver (42) gespeicherten gemeinsamen öffentlichen Nutzeridentität (38).
b) Speichern (132) der neuen Konfiguration für eine Aktivierung bei Übereinstimmung der übermittelten gemeinsamen öffentlichen Nutzeridentität (38) und der gespeicherten gemeinsamen öffentlichen Nutzeridentität (38).

6. Verfahren zur Konfiguration eines persönlichen Netzwerks (40) in einem Mobilfunknetz (10) nach einem der Ansprüche 1 bis *5*, **dadurch gekennzeichnet, dass** die Konfigurationsanforderung (102) von einem Mobilfunkendgerät (24) an den Applikationsserver (42) als XML-Nachricht übermittelt wird.

7. Verfahren zur Konfiguration eines persönlichen Netzwerks (40) in einem Mobilfunknetz (10) nach einem der Ansprüche 1 bis 9 6, **dadurch gekennzeichnet, dass** in der Konfigurationsanforderung (102) von einem Mobilfunkendgerät (24) an den Applikationsserver (42) zusätzlich eine Konfigurationsebene, ein Prioritätswert und/oder weitere Konfigurationsparameter (108) übermittelt werden.

8. Verfahren zur Konfiguration eines persönlichen Netzwerks (40) in einem Mobilfunknetz (10) nach einem der Ansprüche 1 bis *7*, **dadurch gekennzeichnet, dass** der Applikationsserver (42) des persönlichen Netzwerks (40) eine Rufumleitung für die Mobilfunkendgeräte (24, 26, 28) des persönlichen Netzwerks (40) entsprechend einer Konfiguration durchführt.

## Claims

1. A method for the configuration of a personal network (40) composed of at least two mobile terminals (24, 26, 28) having each a private user identity (32, 34, 36) and at least one public user identity (38), that is used by the mobile terminals (24, 26, 28), in an IMS domain (14) of a public mobile radio network (10) comprising the following process steps:
a) providing an application server (42) in the IMS domain (14) for establishing and administrating the personal network (40),
b) registering (48, 58) the private user identities (32, 34, 36) of the mobile terminals (24, 26, 28) and at least one public user identity (38) that is used by the mobile terminals (24, 26, 28) and storing these user identities (32, 34, 36, 38) in a data memory (44) of the application server (42) of the personal network (40),
c) allocating an unequivocal name (106) to each mobile terminal (24, 26, 28) having the same common public user identity (38) in the application server (42) by a user (22) and/or a provider of the mobile radio network (10),
d) configuring (100) the personal network (40) by a user (22) using the unequivocal name (106) of the respective mobile terminals (24, 26, 28) instead of the private user identities (32, 34, 36) of the mobile terminals (24, 26, 28),
**characterized by**
e) selecting an unequivocal name (106) for the mobile terminal (24, 26, 28) by the user (22) of the mobile terminal (24, 26, 28),
f) checking the suitability of the selected unequivocal name (106) by the provider of the mobile radio network (10),
g) modifying an unequivocal name (106) allocated to a mobile terminal (24, 26, 28) during a configuration (100) of the personal network (40) by the user (22).

2. A method for the configuration of a personal network (40) in a mobile radio network (10) according to claim 1, **characterized in that** the allocation of the unequivocal name (106) to a mobile terminal (24, 26, 28) by the user (22) and/or by the provider of the mobile radio network (10) is realized during a provision of the personal network (40).

3. A method for the configuration of a personal network (40) in a mobile radio network (10) according to one of the claims 1 through 2, **characterized in that** the process step of the configuration (100) of the personal network (40) in the mobile radio network (10) furthermore comprises the following steps:
a) transmitting (104) a configuration request (102) from a mobile terminal (24) to the application server (42), which configuration request contains corresponding public user identities (38) and unequivocal names (106) of the mobile terminals (24, 26, 28) which are involved in the configuration (100),
b) replacing (110) the unequivocal names (106) of the mobile terminals (24, 26, 28) by the corresponding private user identities (32, 34, 36) of the mobile terminals (24, 26, 28) in the application server (42),
c) storing (132) the new configuration by the application server (42) for activating the new configuration,
d) transmitting (134) a configuration confirmation (136) from the application server (42) to a mobile terminal (24) for informing a user (22) about a successful configuration (100) of the personal network (40).

4. A method for the configuration of a personal network (40) in a mobile radio network (10) according to one of the claims 1 through 3, **characterized in that** the authorization to carry out the configuration (100) of the personal network (40) is checked (112).

5. A method for the configuration of a personal network (40) in a mobile radio network (10) according to claim 4, **characterized in that** the authorization check (112) comprises the following process steps:
a) checking (112) the authorization to carry out the configuration (100) by the application server (42) by means of the transmitted common public user identity (38) and the common public user identity (38) stored for the application server (42),
b) storing (132) the new configuration for an activation in case of identicalness of the transmitted common public user identity (38) and the stored common public user identity (38).

6. A method for the configuration of a personal network (40) in a mobile radio network (10) according to one of the claims 1 through 5, **characterized in that** the configuration request (102) from a mobile terminal (24) to the application server (42) is transmitted as XML message.

7. A method for the configuration of a personal network (40) in a mobile radio network (10) according to one of the claims 1 through 6, **characterized in that** a configuration level, a priority value and/or other configuration parameters (108) are additionally transmitted within the configuration request (102) from a mobile terminal (24) to the application server (42).

8. A method for the configuration of a personal network (40) in a mobile radio network (10) according to one of the claims 1 through 7, **characterized in that** the application server (42) of the personal network (40) realizes a call forwarding for the mobile terminals (24, 26, 28) of the personal network (40) corresponding to a configuration.

## Revendications

1. Procédé de configuration d'un réseau personnel (40) composé d'au moins deux terminaux mobiles (24, 26, 28) ayant chacun une identité d'utilisateur privé (32, 34, 36) et au moins une identité d'utilisateur publique (38) partagée par les terminaux mobiles (24, 26, 28) dans un domaine IMS (14) d'un réseau de communication mobile public (10), comprenant les étapes suivantes de :
a) fournir un serveur d'applications (42) dans le domaine IMS (14) pour établir et administrer le réseau personnel (40),
b) enregistrer (48, 58) les identités d'utilisateur privées (32, 34, 36) des terminaux mobiles (24, 26, 28) et au moins une identité d'utilisateur publique (38) partagée par les terminaux mobiles (24, 26, 28) et mémoriser ces identités d'utilisateur (32, 34, 36, 38) dans une mémoire de données (44) du serveur d'applications (42) du réseau personnel (40),
c) attribuer un nom univoque (106) à chaque terminal mobile (24, 26, 28) ayant la même identité d'utilisateur publique partagée (38) dans le serveur d'applications (42) par un utilisateur (22) et/ou un fournisseur du réseau de communication mobile (10),
d) configurer (100) le réseau personnel (40) par un utilisateur (22) en utilisant le nom univoque (106) des terminaux mobiles respectifs (24, 26, 28) au lieu des identités d'utilisateur privées (32, 34, 36) des terminaux mobiles (24, 26, 28),
**caractérisé par** les étapes de
e) sélectionner un nom univoque (106) destiné au terminal mobile (24, 26, 28) par l'utilisateur (22) du terminal mobile (24, 26, 28),
f) vérifier l'applicabilité du nom univoque sélectionné (106) par le fournisseur du réseau de communication mobile (10),
g) modifier un nom univoque attribué (106) à un terminal mobile (24, 26, 28) pendant une configuration (100) du réseau personnel (40) par l'utilisateur (22).

2. Procédé de configuration d'un réseau personnel (40) dans un réseau de communication mobile (10) selon la revendication 1, **caractérisé en ce que** l'allocation du nom univoque (106) à un terminal mobile (24, 26, 28) par l'utilisateur (22) et/ou le fournisseur du réseau de communication mobile (10) se fait au cours d'une étape de fourniture du réseau personnel (40).

3. Procédé de configuration d'un réseau personnel (40) dans un réseau de communication mobile (10) selon l'une des revendications 1 à 2, **caractérisé en ce que** l'étape de procédé de la configuration (100) du réseau personnel (40) dans le réseau de communication mobile (10) comprend en outre les étapes suivantes de :
a) transmettre (104) une demande de configuration (102) d'un terminal mobile (24) au serveur d'applications (42), laquelle demande de configuration contient des identités d'utilisateur publiques correspondantes (38) et des noms univoques (106) des terminaux mobiles (24, 26, 28) qui participent à la configuration (100),
b) remplacer (110) les noms univoques (106) des terminaux mobiles (24, 26, 28) par les identités d'utilisateur privées correspondantes (32, 34, 36) des terminaux mobiles (24, 26, 28) au serveur d'applications (42),
c) mémoriser (132) la nouvelle configuration par le serveur d'applications (42) pour activer la nouvelle configuration,
d) transmettre (134) une confirmation de configuration (136) du serveur d'applications (42) à un terminal mobile (24) pour informer un utilisateur (22) d'une configuration réussie (100) du réseau personnel (40).

4. Procédé de configuration d'un réseau personnel (40) dans un réseau de communication mobile (10) selon l'une des revendications 1 à 3, **caractérisé en ce que** l'autorisation de configurer (100) le réseau personnel (40) est vérifiée (112).

5. Procédé de configuration d'un réseau personnel (40) dans un réseau de communication mobile (10) selon la revendication 4, **caractérisé en ce que** la vérification d'autorisation (112) comprend les étapes de procédé suivantes de :
a) vérifier (112) l'autorisation d'effectuer une configuration (100) par le serveur d'applications (42) à l'aide de l'identité d'utilisateur publique partagée et transmise (38) et de l'identité d'utilisateur publique partagée (38) et mémorisée pour le serveur d'applications (42).
b) mémoriser (132) la nouvelle configuration pour une activation en cas de conformité entre l'identité d'utilisateur publique partagée et transmise (38) et l'identité d'utilisateur publique partagée et mémorisée (38).

6. Procédé de configuration d'un réseau personnel (40) dans un réseau de communication mobile (10) selon l'une des revendications 1 à 5, **caractérisé en ce que** la demande de configuration (102) est transmise d'un terminal mobile (24) au serveur d'applications (42) en tant que message XML.

7. Procédé de configuration d'un réseau personnel (40) dans un réseau de communication mobile (10) selon l'une des revendications 1 à 6, **caractérisé en ce qu'**un niveau de configuration, une valeur de priorité et/ou d'autres paramètres de configuration (108) sont supplémentairement transmis avec la demande de configuration (102) d'un terminal mobile (24) au serveur d'applications (42).

8. Procédé de configuration d'un réseau personnel (40) dans un réseau de communication mobile (10) selon l'une des revendications 1 à 7, **caractérisé en ce que** le serveur d'applications (42) du réseau personnel (40) effectue un transfert d'appels pour les terminaux mobiles (24, 26, 28) du réseau personnel (40) conformément à une configuration.
